(19) Europäisches Patentamt
European Patent Office
Office européen des brevets

(11) Publication number: 0 118 706 B1

(12) EUROPEAN PATENT SPECIFICATION

(45) Date of publication of patent specification: 27.05.87

(51) Int. Cl.$^4$: C 08 L 27/06, C 08 L 69/00

(21) Application number: 84100909.5

(22) Date of filing: 28.01.84

# (54) Polymer mixture comprising polyvinylchloride, an aromatic polycarbonate and an aliphatic polyester.

(30) Priority: 14.02.83 NL 8300539

(43) Date of publication of application: 19.09.84 Bulletin 84/38

(45) Publication of the grant of the patent: 27.05.87 Bulletin 87/22

(84) Designated Contracting States: BE DE FR GB IT NL

(58) References cited: US-A-3 305 605

(73) Proprietor: GENERAL ELECTRIC COMPANY
1 River Road
Schenectady New York 12305 (US)

(72) Inventor: Sederel, Willem Lodewijk
General Electric Plastics B.V. P.O. Box 117
NL-4600 AC Bergen op Zoom (NL)
Inventor: Bussink, Jan
General Electric Plastics B.V. P.O. Box 117
NL-4600 AC Bergen op Zoom (NL)

(74) Representative: Grever, Frederik
General Electric Plastics B.V. P.O. Box 117
NL-4600 AC Bergen op Zoom (NL)

EP 0 118 706 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

Background of the invention

Polymer mixtures comprising polyvinyl chloride and an aromatic polycarbonate are known from German Patent Specification 24 02 175 and United States Patent Specification 4,239,861 corresponding thereto. As compared with polyvinyl chloride, these mixtures have a better resistance to deformation at elevated temperatures; however, the known mixtures are brittle. German Patent Application 23 04 894 and the United States Patent Specification 3,882,192 corresponding thereto disclose polymer mixtures which comprise polyvinyl chloride, an aromatic polycarbonate and an ABS graft copolymer or a styrene maleic acid anhydride copolymer or an ethylene vinyl acetate copolymer. The last mentioned known mixtures have some ductility.

The invention provides polymer mixtures on the basis of polyvinyl chloride, an aromatic polycarbonate and an additive whereby the ductility is increased considerably. The new mixtures according to the invention have the further advantage that they can be processed thermoplastically at the temperature usual for polyvinyl chloride, i.e., 170—220°C.

Description of the invention

The polymer mixture according to the invention is characterized in that it comprises 5—90% by weight of polyvinyl chloride, at least 10% by weight of aromatic polycarbonate and 1—40% by weight of poly-(hexamethylene sebacate) or of an aliphatic polyester of the formula

$$\left[ O-\overset{\overset{O}{\|}}{C}-(CH_2)_x-O-\overset{\overset{O}{\|}}{C}-(CH_2)_y \right]_n$$

wherein x and y each independently of each other represent an integer of 4 to 12, inclusive and n indicates the degree of polymerization and is from 10 to 1,000.

The polymer mixture according to the invention preferably comprises poly-ε-caprolactone (PCL) as an aliphatic polyester. PCL is known to be compatible with polyvinyl chloride and aromatic polycarbonates (for this see: J. V. Koleske, R. D. Lundberg, Journal of Polymer Science, part A2, vol 7, *pp*. 795—807 (1969) and United States Patent Specification 3,781,381, respectively).

Polymer mixtures comprising polyvinyl chloride and a polymeric softener are known from United States Patent Specification 3,305,605. The polymeric softener consists of an aliphatic polycarbonate which may be copolymerized with ε-caprolactone.

The polymer mixtures according to the invention have good mechanical properties, can readily be processed by thermoplastic shaping methods and have a good stability against UV light and are thermally stable.

The polymer mixtures according to the invention comprise 5—90% by weight, preferably 10—50% by weight of polyvinyl chloride (PVC). A PVC content of less than 5% by weight generally leads to commercially less attractive products; PVC contents of more than 90% by weight lead to a mixture having too small a resistance to deformation at elevated temperature.

The polymer mixtures according to the invention comprise 10—95% by weight, preferably 40—75% by weight of aromatic polycarbonate (PC). A PC content of less than 10% by weight leads to mixtures having too small a resistance to deformation at elevated temperatures.

The polymer mixtures according to the invention comprise 1—40% by weight, preferably 5—40% by weight, of an aliphatic polyester of the above-indicated formula. Examples of suitable polyesters are poly(caprolactone), poly-(hexamethylene sebacate), poly-α-methyl-α-n-propyl-B-propriolactone) and poly(valerolactone). Mixtures comprising less than 1% by weight of the aliphatic polyesters are difficult to process and are brittle by nature; a PCL content of more than 40% by weight leads to too strong a softening of the resulting polymer mixture.

Poly-ε-caprolactone, i.e., a polymer of the above-indicated formula wherein x and y both are 5, is preferably used as an aliphatic polyester in the polymer mixture according to the invention.

The aliphatic polyesters of the above-indicated formula are compounds known *per se*; they can be prepared by (co)-polymerisation of one or more hydroxycarboxylic acids or the lactone thereof. The degree of polymerization of such polyesters (n in the above formula) may vary between 10 and 1000, preferably between 100 and 300.

Polyvinyl chloride (PVC) is to be understood to include in this Specification all polymers and copolymers which are built up for at least 70 mole% from units derived from vinyl chloride. The vinyl chloride may be copolymerized with, for example, vinylidene chloride, vinylidene fluoride, vinyl esters, such as vinyl acetate, (meth)acrylic acid (esters), amides and nitrile compounds of (meth)acrylic acid, maleic acid esters and semi-esters, respectively, maleic imide, vinyl ether and olephenic unsaturated hydrocarbons, for example, ethylene, propylene.

A PVC having a K-value (according to Fikentscher, measured in a 1% cyclohexanone solution of 23°C) of 50—75 is preferably used. The PVC may be prepared by emulsion, polymerization or suspension, or also mass polymerization.

Polyvinyl chlorides which are mixed with stabilizers are preferably used in the polymer mixtures according to the invention. As stabilizers may be used the additives usual for PVC, for example, stabilizers on the basis of lead, barium/cadmium, calcium/zinc and organic tin compounds.

Aromatic polycarbonates are to be understood to mean homopolycarbonates, copolycarbonates and mixtures of various homo- and copolycarbonates which comprise units derived from one or more aromatic compounds having at least two hydroxy groups. Particularly suitable are those polycarbonates which comprise units of bis(hydroxyphenyl) alkanes, for example, 2,2-bis(4-hydroxyphenyl)propane or polycarbonates the aromatic nucleus of which is substituted with one or more halogen atoms. Also suitable are aromatic polycarbonates which comprise units derived from 2,2-bis(,3,5-di-methyl-4-hydroxyphenyl)propane.

The aromatic polycarbonates as used in the polymer mixture according to the invention may have a weight averaged molecular weight of 10,000—200,000, preferably of 14,000—50,000.

The polymer mixtures according to the invention may comprise, in addition to the above-mentioned constituents, any further additives usual for PVC and PC; by name may be mentioned pigments and dyes, additives to obtain flame retarding properties, additives to improve the impact strength, additives to further improve the processability, for example, lubricants and fillers.

The polymer mixtures according to the invention may be formed into articles by means of the usual methods for thermoplastic materials. The polymer mixtures are suitable in particular for processing into thin foils.

The polymer mixtures according to the invention can be prepared by dry mixing, extrusion, mixing of solutions of the various constituents or while using melt mixing methods. It is to be preferred first to mix the PC with the PCL, for example, by extrusion. A softened PC is then obtained. The resulting softened PC can be mixed in the PVC at comparatively low temperatures (below 220°C), for example, by extrusion. When the PVC would first be mixed with the PCL or when the three components are mixed simultaneously, higher temperatures are necessary at low content of aliphatic polyester to obtain an intimate mixture; these higher temperatures (above 220°C) may result in a decomposition of the PVC.

The polymer mixtures according to the invention have the following structure. Due to the compatibility of the aliphatic polyester of the above-indicated formula with both PVC and PC, very homogeneous dispersions are obtained. The results of dynamic mechanical measurements give an indication that, in dependence on the relative quantities of PC and PVC, the structure consists of plasticized PVC dispersed in a continuous phase of plasticized PC (when the relative quantity of PC is larger than that of the PVC) or of plasticized PC dispersed in a continuous phase of plasticized PVC.

The invention will be described with reference to the following examples:

Examples I to IX

Polycarbonate, the homopolymer derived from 2,2-bis(4-hydroxyphenyl)propane and phosgene, having a weight averaged molecular weight of 22,500, was mixed in a 30 mm single blade Leistriz extruder at 240°C with poly-ε-caprolactone (having a weight averaged molecular weight of 50,000, n of about 100). The extrudate was ground and mixed with polyvinyl chloride (the homopolymer having a K-value of 66) at 25°C. The polyvinyl chloride was pre-mixed with 0.8% by weight of a usual PVC stabilizer (an organic tin compound with the indication Harochem T 201 of Messrs. Haagen Chemie B.V.) and 0.3% by weight of a usual lubricant (AC-316A of Allied Chemical Company). For the quantities of the polymers used see the following table. For comparison, the examples VIII and IX were carried out without PCL and pure PVC, respectively.

Foils having a thickness of 550 micrometer were made from the resulting polymer mixtures on a Collin roller at 185°C. Draw rods were punched from the foil. The tensile strength (upon yielding and rupture) and the elongation upon rupture of the rods were determined. The Vicat B value (according to DIN 53460) and the hardness (shore D) were determined on compressed plates having a thickness of 3 mm. The results are recorded in Table A.

It can be seen from the results of Table A that the polymer mixtures according to the invention are more ductile than PVC/PC mixtures which comprise no polyester, while a higher Vicat B value can be obtained than that of pure PVC (Example IX).

TABLE A

| Example | I | II | III | IV | V | VI | VII | VIII* | IX* |
|---|---|---|---|---|---|---|---|---|---|
| Constituent parts by weight PVC | 40 | 30 | 20 | 34.8 | 16.7 | 15.4 | 14.3 | 50 | 100 |
| PC | 51 | 59.5 | 68 | 44.3 | 56.7 | 52.3 | 48.6 | 50 | — |
| PCL | 9 | 10.5 | 12 | 20.9 | 26.6 | 32.3 | 37.1 | — | — |
| Tensile strength at yield point ($N/mm^2$) | 52.3 | 47.5 | 40.6 | ———no value to be determined——— | | | | | |
| Yield point (%) | 7 | 7 | 7 | ———no value to be determined——— | | | | | |
| Tensile strength at rupture ($N/mm^2$) | 42.9 | 44.6 | 50 | 38 | 30 | 34 | 37 | 55 | 42 |
| Elongation at rupture (%) | 49 | 45 | 101 | 190 | 185 | 325 | 240 | 5 | 6 |
| Vicat B (%) (°C) | 94 | 94 | 97 | 61 | 63 | 53 | 49 | 108 | 75 |
| Hardness (Shore D) | — | — | 73 | — | 63 | 59 | 57 | 83 | 79 |

* for comparison

**Claims**

1. A polymer mixture comprising polyvinyl chloride and an aromatic polycarbonate, characterized in that the mixture comprises 5—90% by weight of polyv;inyl chloride, at least 10% by weight of aromatic polycarbonate and 1—40% by weight of poly-(hexamethylene sebacate) or of an aliphatic polyester of the formula:

$$-\!\!\left[O-\overset{\overset{O}{\|}}{C}-(CH_2)_x-O-\overset{\overset{O}{\|}}{C}-(CH_2)_y\right]_n\!\!-$$

wherein x and y each independently of each other represent an integer of 4 to about 12 and n indicates the degree of polymerization and is from 10 to 1,000.

2. A polymer mixture as claimed in claim 1, characterized in that the mixture comprises poly-ε-caprolactone as a polyester.

3. A polymer mixture as claimed in Claim 1, characterized in that the mixture comprises 10—50% by weight of polyvinyl chloride, 40—75% by weight of polycarbonate and 5—40% by weight of aliphatic polyester.

4. A method of preparing a polymer mixture as claimed in claim 2, characterized in that the polycarbonate is premixed with the poly-ε-caprolactone and the resulting premixture is mixed with the polyvinyl chloride.

5. Articles manufactured from the polymer mixture as claimed in claim 1.

**Patentansprüche**

1. Polymermischung enthaltend Polyvinylchlorid und ein aromatisches Polycarbonat, dadurch gekennzeichnet, daß die Mischung 5 bis 90 Gewichtsprozent Polyvinylchlorid, wenigstens 10 Gewichtsprozent aromatisches Polycarbonat und 1 bis 40 Gewichtsprozent Poly-(hexamethylen-sebacat) oder einen aliphatischen Polyester der Formel

$$-\!\!\left[O-\overset{\overset{O}{\|}}{C}-(CH_2)_x-O-\overset{\overset{O}{\|}}{C}-(CH_2)_y\right]_n\!\!-$$

enthält, worin x und y jeweils unabhängig voneinander eine ganze Zahl von 4 bis etwa 12 darstellen und n den Polymerisationsgrad anzeigt und von 10 bis 1000 beträgt.

2. Polymermischung nach Anspruch 1, dadurch gekennzeichnet, daß die Mischung Poly-ε-caprolacton als Polyester enthält.

3. Polymermischung nach Anspruch 1, dadurch gekennzeichnet, daß die Mischung 10 bis 50 Gewichtsprozent Polyvinylchlorid, 40 bis 75 Gewichtsprozent Polycarbonat und 5 bis 40 Gewichtsprozent aliphatischen Polyester enthält.

4. Verfahren zur Herstellung einer Polymermischung nach Anspruch 2, dadurch gekennzeichnet, daß das Polycarbonat mit dem Poly-ε-caprolacton vorgemischt und die erhaltene Vormischung mit dem Polyvinylchlorid gemischt wird.

5. Gegenstand der aus der Polymermischung nach Anspruch 1 hergestellt worden ist.

**Revendications**

1. Mélange de polymères comprenant du poly(chlorure de vinyle) et un polycarbonate aromatique, caractérisé en ce que le mélange comprend de 5 à 90% en poids de poly(chlorure de vinyle), au moins 10% en poids de polycarbonate aromatique et de 1 à 40% en poids de poly(sébaçate d'hexaméthylène) ou d'un polyester aliphatique répondant à la formule:

$$-\!\!\left[O-\overset{\overset{O}{\|}}{C}-(CH_2)_x-O-\overset{\overset{O}{\|}}{C}-(CH_2)_y\right]_n\!\!-$$

dans laquelle x et y représentent indépendamment l'un de l'autre un nombre entier compris entre 4 et environ 12 et n indique le degré de polymérisation et est compris entre 10 et 1000.

2. Mélange de polymères selon la revendication 1, caractérisé en ce que le mélange comprend de la poly-ε-caprolactone comme polyester.

3. Mélange de polymères selon la revendication 1 caractérisé en ce que le mélange comprend de 10 à 50% en poids de poly(chlorure de vinyle), de 40 à 75% en poids de polycarbonate et de 5 à 40% en poids de polyester aliphatique.

4. Procédé de préparation d'un mélange de polymères selon la revendication 2, caractérisé en ce que

l'on prémélange le polycarbonate avec le poly-ε-caprolactone et en ce qu'on mélange le prémélange résultant avec le poly(chlorure de vinyle).

5. Pièce manufacturée à partir du mélange de polymères selon la revendication 1.